# EUROPEAN PATENT APPLICATION

(11) **EP 2 006 548 A1**
(43) Date of publication of application: **24.12.2008**
(21) Application number: 07425382.4
(22) Date of filing: 20.06.2007
(51) Int. Cl.: F15B 15/14

(54) **Hydraulic actuator for servo-assisted mechanical transmission**

(71) Applicant: MAGNETI MARELLI POWERTRAIN S.p.A., 20011 Corbetta (MI) (IT)
(72) Inventor: Lorenzoni, Marcello, 40132 Bologna (IT); Michelini, Frederico, 44100 Ferrara (IT); Giorgini, Stefano, 40061 Minerbio (IT)
(74) Representative: Cerbaro, Elena

(57) **Abstract**

A hydraulic actuator (15; 16; 17) for a servo-assisted mechanical transmission; the hydraulic actuator (15; 16; 17) is provided with: at least one actuation chamber (22) adapted to be filled with a pressurized control fluid; and a mobile piston (23) which laterally delimits the actuation chamber (22), slides inside the actuation chamber (22) under the bias of the pressurized control fluid, and is mechanically connected to a control shaft (20); the piston (23) presents: a joint (27), which is formed by metallic material and is mechanically connected to control shaft (20) to transmit the motion to the control shaft (20) itself; and at least one actuation portion (28), which is formed by molded plastic material, is integral with the joint (27) and laterally delimits the actuation chamber (22).

## Description

### TECHNICAL FIELD

The present invention relates to a hydraulic actuator for a servo-assisted mechanical transmission.

### BACKGROUND ART

Servo-assisted mechanical transmissions, which are structurally similar to mechanical manual transmission of the traditional type except for the fact that the clutch pedal and the gear selection lever operated by the driver are replaced by corresponding electrical or hydraulic servo-controls, are increasingly widespread. By using a servo-assisted mechanical transmission, the driver only needs to send the order to shift gear up or down to a transmission control unit and the transmission control unit autonomously shifts gear by operating both on the engine and on the servo-controls associated to clutch and gearbox.

The gear shifting order may be generated either manually, i.e. following a command imparted by the driver, or automatically, i.e. regardless of the driver's action. When the gear shifting order is generated, the transmission control unit drives the servo-control of the clutch to open the clutch so as to mechanically separate a primary shaft of the gearbox from a crankshaft; at the same time, the transmission control unit acts on the engine control unit to temporarily reduce the torque supplied by the engine itself.

Once the transmission control unit has verified the opening of the clutch, the transmission control unit drives the gearbox servo-control to disengage the currently engaged gear; when the transmission control unit has verified gear disengagement, the transmission control unit drives the gearbox servo-control to displace the gearbox control shaft so as to arrange engagement of the new gear. Once the transmission control unit has verified that the gearbox control shaft has reached the required position, the transmission control unit drives the gearbox servo-control to engage the new gear.

Finally, when the transmission control unit has checked that the new gear has been engaged, the transmission control unit drives the clutch servo-control to close the clutch and make the primary shaft of the gearbox and the crankshaft reciprocally and angularly integral; at the same time, the transmission control unit acts on the engine control unit to restore the torque supplied by the engine itself.

The clutch servo-control is generally of the hydraulic type and comprises a single hydraulic actuator for displacing the clutch from the closed position to the open position and vice versa. Generally, the gearbox servo-control is also of the hydraulic type and acts on a gearbox control shaft to impress on the control shaft itself both an axial displacement, i.e. along a central axis, to select the gear range, and a rotation about the central axis to engage and disengage each gear. Consequently, the gearbox servo-control comprises a first hydraulic actuator mechanically coupled to the control shaft to axially displace the control shaft and a second hydraulic actuator mechanically coupled to the control shaft to turn the control shaft.

A hydraulic actuator comprises at least one actuation chamber delimited on one side by a mobile piston, which slides along the actuation chamber itself and is connected to a control shaft; the control chamber is filled with a pressurized fluid to displace the piston (and thus the control shaft) along the control chamber itself. The hydraulic actuators used in a servo-assisted mechanical transmission may be dual-acting, i.e. they comprise two actuation chambers which are alternatively filled with a pressurized fluid to axially displace a piston coupled to a control shaft in the two directions; alternatively, the hydraulic actuators used in a servo-assisted mechanical transmission may be single-acting, i.e. they comprise a single actuation chamber which is filled with a pressurized fluid to axially displace a piston coupled to a control shaft in a direction against the elastic bias of a spring which pushes the control shaft in the opposite direction.

In the currently marketed servo-assisted mechanical transmissions, the pistons of the hydraulic actuators are formed by steel (or other metal material) by means of an initial casting and subsequent machining with machine tools; accordingly, the production of the hydraulic actuator pistons is long and expensive.

### DISCLOSURE OF INVENTION

It is the object of the present invention to provide a hydraulic actuator for a servo-assisted mechanical transmission, such a servo-control being free from the drawbacks described above, and specifically it being easy and cost-effective to manufacture and very compact.

According to the present invention, a hydraulic actuator for a servo-assisted mechanical transmission is provided as claimed in the accompanying claims.

### BRIEF DESCRIPTION OF THE DRAWINGS

The present invention will now be described with reference to the accompanying drawings which illustrate a non-limitative embodiment thereof, in which:
- figure 1 is a diagrammatic view of a vehicle provided with a servo-assisted mechanical transmission;
- figure 2 is a diagrammatic section view with parts removed for clarity of a hydraulic actuator of the servo-assisted mechanical transmission in figure 1 made according to the present invention;
- figure 3 is an enlarged scale view of a detail of a piston of the hydraulic actuator in figure 2;
- figure 4 is a perspective view of a piston of the hydraulic actuator in figure 2 with some parts removed for clarity; and
- figure 5 is a diagrammatic view with some parts removed for clarity of a mould used for making the piston of the hydraulic actuator in figure 2.

### PREFERRED EMBODIMENTS OF THE INVENTION

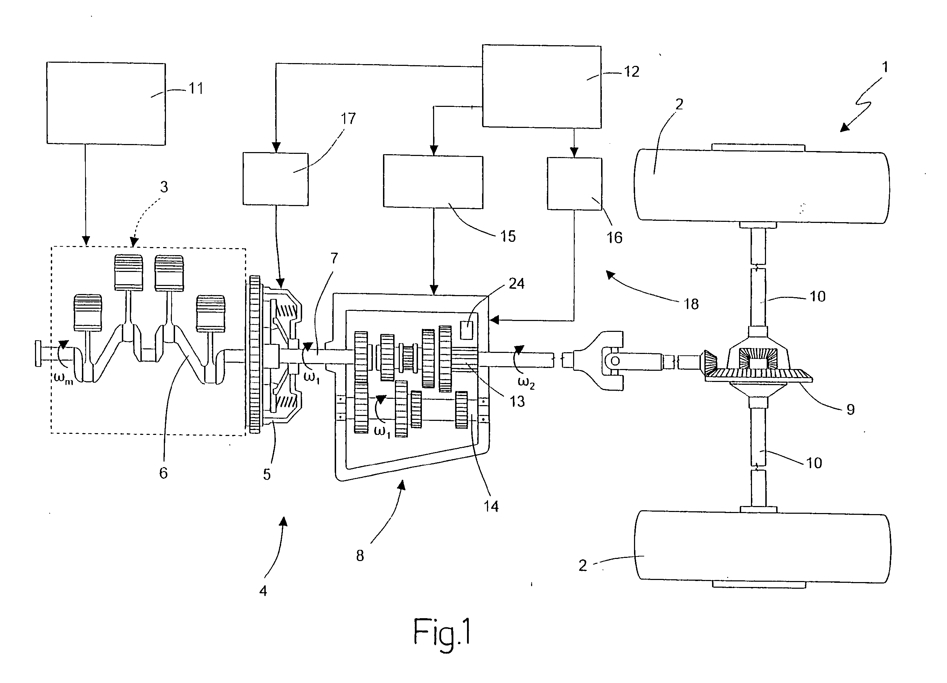

In figure 1, numeral 1 indicates as a whole a car provided with two front wheels and two rear drive wheels 2 which receive the torque generated by an internal combustion engine 3 by means of a servo-assisted transmission 4. Servo-assisted transmission 4 comprises a servo-assisted clutch 5, which is housed in a bell integral with engine 3 and is adapted to connect crankshaft 6 of engine 3 to a propeller shaft 7 ending in a servo-assisted gearbox 8 arranged on the rear axle. A self-locking differential 9, from which a pair of drive axles 10 depart, each of which is integral with a corresponding rear drive wheel 2, is arranged in a cascade to servo-assisted gearbox 8.

Car 1 comprises an engine control unit 11 (diagrammatically shown), a transmission control unit 12 (diagrammatically shown), and a BUS line, which is made according to the CAN (Car Area Network) protocol and covers the whole of throughout car 1. Both engine control unit 11 and transmission control unit 12 are connected to the BUS line and may therefore reciprocally communicate by means of messages forwarded on the BUS line itself.

Servo-assisted gearbox 8 comprises a primary shaft 13, which turns at an angular velocity ω₁, and a secondary shaft 14, which turns at an angular velocity ω₂ and transmits motion to rear drive wheels 2 by means of differential 9 and drive axle pair 10. Servo-assisted gearbox 8 is operated by a hydraulic actuator 15 for engaging/disengaging a gear and by a hydraulic actuator 16 for selecting the gear range; hydraulic actuators 15 and 16 are driven by control unit 12 of servo-assisted transmission 4.

By interposition of servo-assisted clutch 5, primary shaft 13 is connected to crankshaft 6, which is revolved by engine 3 and turns at an angular velocity ωₘ. Servo-assisted clutch 5 is operated by a hydraulic actuator 17 driven by control unit 12 of servo-assisted clutch 4.

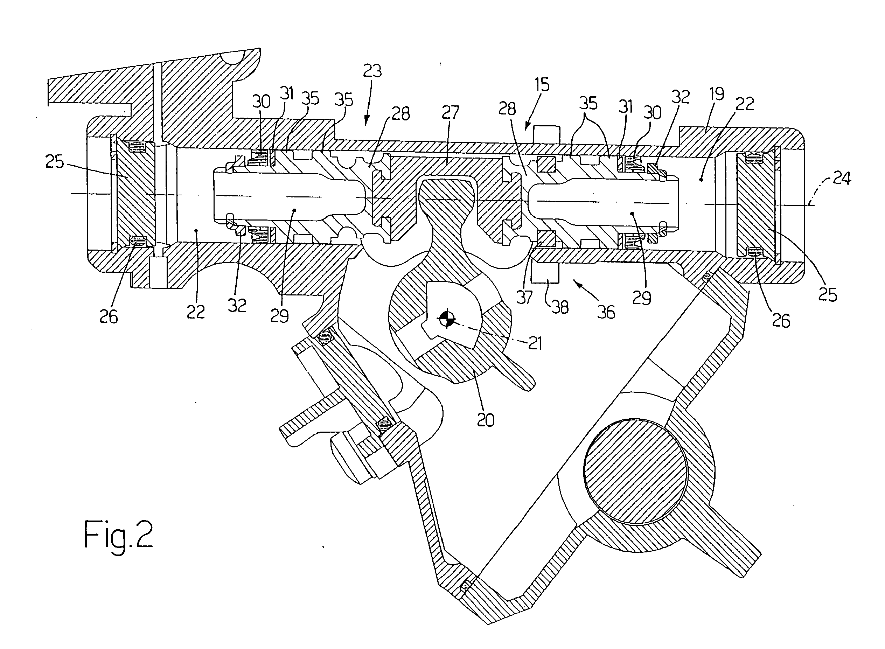

Hydraulic actuators 15, 16 and 17 form part of an actuation system 18 of servo-assisted transmission 4, partially shown in figure 2. As shown in figure 2, actuation system 18 comprises a supporting body 19 (partially shown in figure 2) in which three hydraulic actuators 15, 16 and 17 are inserted. Specifically, figure 2 shows hydraulic actuator 15 adapted to engage and disengage each gear by impressing a rotation about a central rotation axis 21 thereof on a control shaft 20; instead, hydraulic actuator 16 (not shown), induces an axial displacement of control shaft 20 itself along central rotation axis 21 on control shaft 20 to select the gear range.

As shown in figure 2, hydraulic actuator 15 presents two actuation chambers 22, which are obtained in supporting body 19 and are alternatively filled with pressurized oil (which constitutes a control fluid of actuation system 18) controlled by a pair of three-way solenoid valves to axially displace a dual-acting piston 23 along a longitudinal axis 24 thereof. Piston 23 is mechanically connected to control shaft 20 so that the axial sliding of piston 23 determines a corresponding rotation of control shaft 20 about rotation axis 21. Each actuation chamber 22 presents a cylindrical shape and is delimited on one side by piston 23 and on the opposite side by a capping element 25, which is fixed, integral with supporting body 19 and is provided with a seal 26.

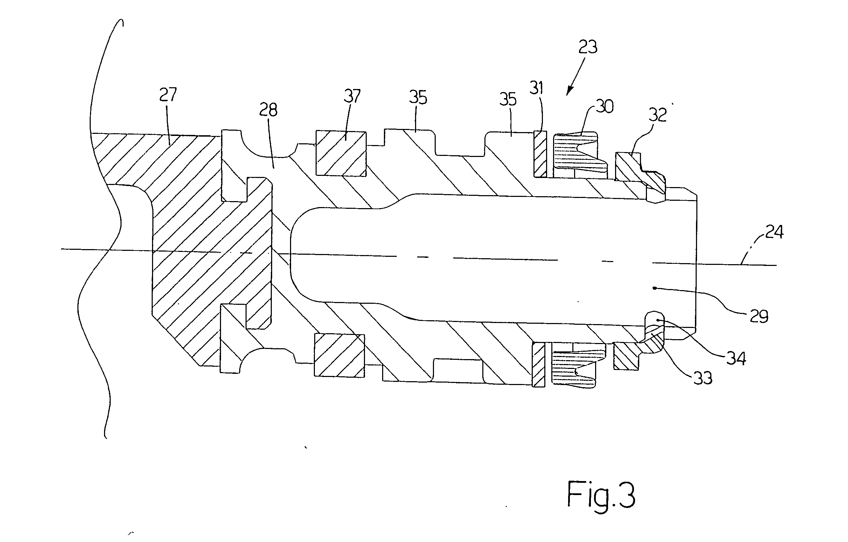

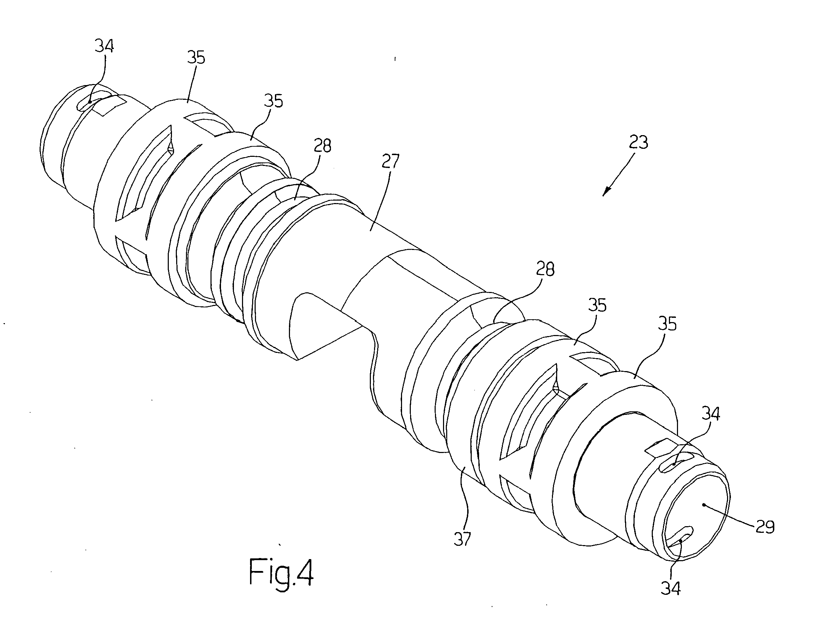

As shown in figures 3 and 4, piston 23 comprises a joint 27, which is formed by metal material, is arranged in central position and is mechanically connected to control shaft 20 to transmit the motion to control shaft 20 itself. Furthermore, piston 23 comprises two actuation portions 28, which are reciprocally coaxial, are arranged on opposite sides of joint 27 (i.e. on opposite sides of piston 23), are made of molded plastic material, are integral with joint 27, and laterally delimit actuation chambers 22.

According to a preferred embodiment, each actuation portion 28 presents a blank central hole 29 open towards actuation chamber 22. In virtue of the presence of central hole 29, each actuation portion 28 presents a rather constant and limited thickness; in this manner, it is easier to form actuation portions 28 by the molding of plastic material.

As previously mentioned, each actuation portion 28 laterally delimits an actuation chamber 22; in order to ensure the necessary sealing and thus avoid leakage of pressurized oil out of actuation chambers 22, each actuation chamber 28 is provided with an annular seal 30, which is preferably a lip seal, it is arranged about actuation portion 28, and seals actuation chamber 22. A back-up ring 31 is contemplated for each annular seal 30, such ring being arranged about actuation portion 28 in contact with annular seal 30 and on opposite side with respect to corresponding actuation chamber 22.

Furthermore, an annular locking element 32 is contemplated for each annular seal 30, such a locking element being arranged about actuation portion 28 in contact with annular seal 30 and on the same side as corresponding actuation chamber 22. The function of each annular locking element 32 is to axially withhold annular seal 30 about actuation portion 28 in the required position. Preferably, annular locking element 32 is made integral with actuation portion 28 by means of a socket coupling; specifically, annular locking element 32 presents radial teeth 33 which are socket-fitted into corresponding radial seats 34 obtained in actuation portion 28.

According to a preferred embodiment shown in the accompanying figures, each actuation portion 28 presents guiding segments 35 having an external diameter essentially equal to the internal diagram of actuation chamber 22 to slide along the internal walls of actuation chamber 22 while the remaining parts of actuation portion 28 present an external diameter smaller than the internal diameter of actuation chamber 22. According to a possible embodiment, each guiding segment 35 consists of an annular runner formed by a low-friction coefficient material and independent from actuation portion 28 and attached to portion 28 itself; in this case, each runner may be either driven into actuation portion 28, or co-molded with actuation portion 28. According to a different embodiment, each guiding segment 25 consists of an annular swelling of actuation portion 28 monolithic with actuation portion 28 itself; in other words, each guiding segment 35 is an integral part of actuation portion 28 and is integrally made in one piece with actuation portion 28 during the molding of actuation portion 28 itself.

According to a preferred embodiment shown in the accompanying figures, hydraulic actuator 15 comprises a contactless position sensor 36 of the magnetic type for reading the axial position of piston 23. Position sensor 36 comprises an annular permanent magnet 37, which is arranged about an actuation portion 28, and a reading device 38, which is adapted to detect the position of permanent magnet 37 and is arranged in a fixed position near piston 23. In this case, joint 27 is preferably formed by non-magnetic material to avoid to negatively affect the reading of position sensor 36.

According to a preferred embodiment, hydraulic actuator 15 is dual-acting, i.e. it comprises two actuation chambers 22 and thus piston 23 comprises two actuation portions 28 each of which delimits a corresponding actuation chamber 22. According to a different embodiment (not shown), hydraulic actuator 15 could be single-acting and thus comprise a single actuation chamber 22; in this case, piston 23 comprises a single actuation portion 28.

Figures 2-4 show hydraulic actuator 15 which engages/disengages the gears; selecting hydraulic actuator 16 and hydraulic actuator 17 which operates servo-assisted clutch 5 are essentially formed in the same manner as hydraulic actuator 15 and each comprise a corresponding piston having a joint formed by metal material and at least one actuation portion formed by molded plastic material.

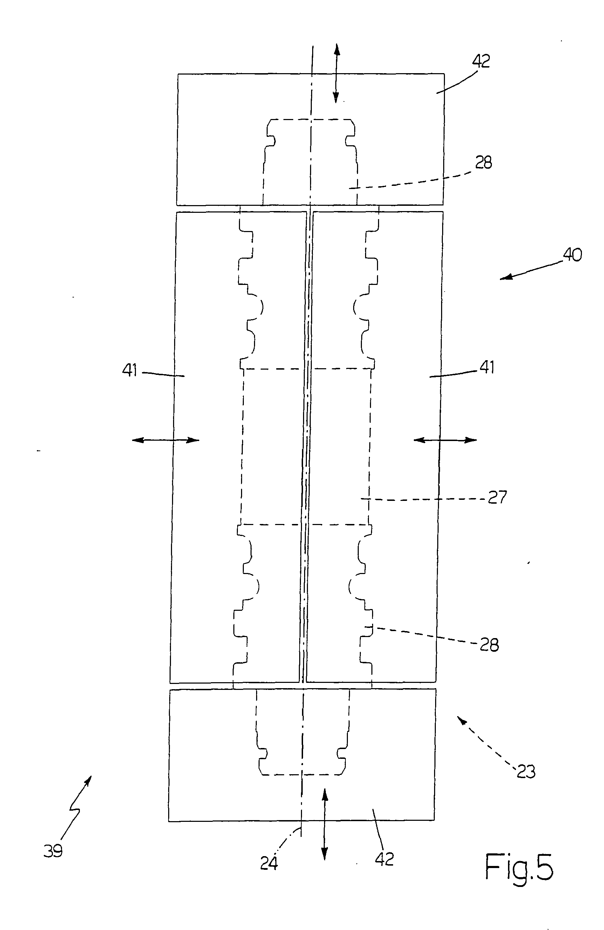

According to a preferred embodiment, piston 23 is made by co-molding, i.e. magnetic joint 27 is inserted in a mould 39 (diagrammatically illustrated in figure 5) and actuation portions 28 are co-molded on metallic joint 27 by feeding (injecting) molten plastic material into mould 39. Obviously, if contemplated, also magnet 37 and/or the annular runners formed by low-friction coefficient material forming guiding segments 36 may be preventively inserted inside mould 39.

Preferably, mould 39 comprises a central portion 40 consisting of two halves 41 which are closed about joint 27 and subsequently opened by means of a transversal movement (i.e. perpendicular to longitudinal axis 24 of piston 23). Furthermore, mould 39 comprises two peripheral portions 42, each of which consists of a single centrally perforated part which is removed from one end of actuation portion 28 by means of an axial movement (i.e. parallel to longitudinal axis 24 of piston 23). In this manner, the external ends of actuation portions 28 onto which annular seals 30 will be fitted are free from burrs or axial imperfections related to the seam zone of the mould and thus annular seals 30 will be less mechanically stressed during use.

The above described hydraulic actuator 15 presents many advantages, because it is simple and cost-effective to make; specifically, making piston 23 by co-molding of plastic material allows to considerably reduce manufacturing costs and times. Finally, in virtue of the fact that joint 27 is formed by metal material, piston 23 is capable of transmitting high forces to control shaft 20 without breaking or wearing.

## Claims

1. A hydraulic actuator (15; 16; 17) for a servo-assisted mechanical transmission; the hydraulic actuator (15; 16; 17) comprises:
at least one actuation chamber (22) adapted to be filled with a pressurized control fluid; and
a mobile piston (23) which laterally delimits the actuation chamber (22), slides inside the actuation chamber (22) under the bias of the pressurized control fluid, and is mechanically connected to a control shaft (20);
the hydraulic actuator (15; 16; 17) is **characterized in that** the piston (23) comprises:
a joint (27), which is formed by metal material and is mechanically connected to control shaft (20) to transmit the motion to the control shaft (20) itself; and
at least one actuation portion (28), which is formed by molded plastic material, is integral with the joint (27) and laterally delimits the actuation chamber (22).

2. A hydraulic actuator (15; 16; 17) according to claim 1 and comprising two reciprocally coaxial actuation chambers (22) arranged on opposite sides of the piston (23); the piston (23) comprises two actuation portions (28), which are arranged on opposite sides of the joint (27) and each of which laterally delimits a corresponding actuation chamber (22).

3. A hydraulic actuator (15; 16; 17) according to claim 1 or 2, wherein the actuation portion (28) presents a blank central hole (29) open towards the actuation chamber (22).

4. A hydraulic actuator (15; 16; 17) according to claim 1, 2 or 3 and comprising at least one annular seal (30), which is arranged about the actuation portion (28) and seals the actuation chamber (22).

5. A hydraulic actuator (15; 16; 17) according to claim 4, and comprising a back-up ring (31), which is arranged about the actuation portion (28) in contact with the annular seal (30) and on opposite side with respect to the actuation chamber (22).

6. A hydraulic actuator (15; 16; 17) according to claim 4 or 5 and comprising an annular locking element (32), which is arranged about the actuation portion (28) in contact with the annular seal (30) and on the same side as the actuation chamber (22).

7. A hydraulic actuator (15; 16; 17) according to claim 6, wherein the annular locking element (32) is made integral with the actuation portion (28).

8. A hydraulic actuator (15; 16; 17) according to claim 7, wherein the annular locking element (32) is made integral with the actuation portion (28) by a socket-fitting.

9. A hydraulic actuator (15; 16; 17) according to claim 8, wherein the annular locking element (32) presents teeth (33) which are socket-fitted into corresponding seats (34) obtained in the actuation portion (28).

10. A hydraulic actuator (15; 16; 17) according to one of claims from 1 to 9, wherein the actuation portion (28) presents guiding segments (35) having an external diameter essentially equal to the internal diameter of the actuation chamber (22) for sliding along the internal walls of the actuation chamber (22) while the remaining parts of actuation portion (28) present a smaller external diameter with respect to the internal diameter of the actuation chamber (22).

11. A hydraulic actuator (15; 16; 17) according to claim 10, wherein each guiding segment (35) consists of an annular runner independent from the actuation portion (28) and fixed to the actuation potion (28) itself.

12. A hydraulic actuator (15; 16; 17) according to claim 10, wherein each guiding segment (35) consists of an annular swelling of the actuation portion (28) monolithic with actuation potion (28) itself.

13. A hydraulic actuator (15; 16; 17) according to one of claims from 1 to 12 and comprising a contactless position sensor (36) of the magnetic type for reading the axial position of the piston (23); the position sensor (36) comprising a permanent annular magnet (37), which is arranged about an actuation portion (28), and a reading device (38), which is adapted to detect the position of the permanent magnet (37) and is arranged in a fixed position near the piston (23).

14. A hydraulic actuator (15; 16; 17) according to claim 13, wherein the joint (27) is made of non-magnetic material.

15. A manufacturing method for a mobile piston (23) of a hydraulic actuator (15; 16; 17) for a servo-assisted mechanical transmission; the piston (23) comprising:
a joint (27), which is formed by metal material and is mechanically connected to a control shaft (20) of the hydraulic actuator (15; 16; 17) to transmit the motion from the control shaft (20) itself; and
at least one actuation portion (28), which is formed by molded plastic material, is integral with the joint (27) and laterally delimits the actuation chamber (22) of the hydraulic actuator (15; 16; 17);
the method comprising the steps of:
forming the joint (27) in a metal material;
arranging the joint (27) inside a mould (39); and
feeding a plastic material into the mould (39) for making the actuation portion (28) by co-molding.

16. A method according to claim 15, wherein the mould (39) comprises:
a central portion (40) consisting of two halves (41) which are closed about the joint (27) and subsequently opened by means of a transversal movement; and
a peripheral portion (42) consisting of a single centrally perforated part which is removed from one end of the actuation portion (28) by means of an axial movement.
